# FASCICULE DE BREVET EUROPEEN

(11) **EP 3 227 105 B1**
(45) Date de publication et mention de la délivrance du brevet: **21.11.2018**
(21) Numéro de dépôt: 15798415.4
(22) Date de dépôt: 23.11.2015
(51) Int. Cl.: B32B 7/12, B32B 25/14, B32B 25/16, B60C 1/00, C09J 123/06, C09J 123/12, C08L 23/06, C08L 23/12, B60C 11/00

(54) **STRATIFIÉ ÉLASTOMÈRE COMPRENANT 3 COUCHES**
ELASTOMERLAMINAT MIT DREI SCHICHTEN
ELASTOMER LAMINATE COMPRISING THREE LAYERS

(30) Priorité: 02.12.2014 FR 1461754
(43) Date de publication de la demande: 11.10.2017
(73) Titulaire: Compagnie Générale des Etablissements Michelin, 63000 Clermont-Ferrand (FR)
(72) Inventeur: ARAUJO DA SILVA, José-Carlos, F-63040 Clermont-Ferrand Cedex 9 (FR); FOGLIENI, Baptiste, F-63040 Clermont-Ferrand Cedex 9 (FR)
(74) Mandataire: Gandon-Pain, Sylvie
(86) Numéro de dépôt international: PCT/EP2015/077349
(87) Numéro de publication internationale: WO 2016/087247

(56) Documents cités:
- EP-A1- 1 880 871
- EP-B1- 1 940 617
- EP-B1- 2 507 335

## Description

La présente invention est celui des stratifiés élastomères comprenant 3 couches de composition de caoutchouc diénique, destinés en particulier à être utilisés dans un pneumatique.

Un pneumatique comporte usuellement une bande de roulement, deux flancs, deux bourrelets, une armature de carcasse passant dans les deux flancs et ancrée aux deux bourrelets, et une armature de sommet disposée circonférentiellement entre la bande de roulement et l'armature de carcasse. La bande de roulement est destinée à entrer au contact de la surface de roulement du pneumatique. Le pneumatique peut comporter en outre une sous-couche à la bande de roulement, la sous-couche étant disposée circonférentiellement entre la bande de roulement et l'armature de carcasse, de préférence entre la bande de roulement et l'armature de sommet, la sous-couche à la bande roulement étant généralement adjacente à la bande de roulement.

Dans le pneumatique, la sous-couche à la bande de roulement doit adhérer à la bande de roulement de façon suffisante pour éviter que la sous-couche à la surface de la bande de roulement se désolidarise de la bande de roulement pendant toute la durée de vie du pneumatique. La sous-couche adhère généralement à la bande de roulement par l'intermédiaire de phénomènes physiques ou chimiques, comme les phénomènes d'interpénétration, d'enchevêtrement ou de réticulation des compositions de caoutchouc diénique constitutives respectivement de la bande de roulement et de la sous-couche à la bande de roulement. Dans les conditions adaptées de mise en oeuvre et de cuisson des compositions de caoutchouc diénique posées l'une contre l'autre, ces compositions sont solidement collées entres-elles et le complexe obtenu permet d'endurer les sollicitations liées au domaine d'application concerné, notamment celui du pneumatique.

Les compositions qui peuvent être utilisées en bande de roulement peuvent contenir une matrice élastomère qui est faiblement insaturée ou qui comprend un élastomère terpolymère d'éthylène, d'une α-oléfine et d'un diène non conjugué. Une matrice élastomère est considérée comme faiblement insaturée lorsqu'elle contient moins de 10% en masse d'unité diénique. Généralement, la composition de caoutchouc d'une sous-couche à la bande de roulement est généralement à base d'une matrice élastomère qui comprend du caoutchouc naturel considéré comme un élastomère fortement insaturé. Or le niveau d'adhésion entre d'une part une première composition à base d'une matrice élastomère qui est faiblement insaturée ou qui contient un élastomère terpolymère d'éthylène, d'une α-oléfine et d'un diène non conjugué, et d'autre part une seconde composition à base d'une matrice élastomère contenant un élastomère fortement insaturé peut être jugé insuffisant, notamment pour une application en pneumatique de la première composition en tant que bande de roulement du pneumatique et de la seconde composition en tant que sous couche à la bande de roulement.

Pour y remédier, on peut recourir à l'utilisation d'un matériau qui fera office de colle ou de gomme de liaison entre la première composition et la seconde composition, notamment utilisées respectivement en tant que bande de roulement d'un pneumatique et sous-couche à la bande de roulement. Dans ce cas-là, la sous couche à la bande de roulement n'est plus adjacente sur toute sa longueur à la bande de roulement, mais en est séparée par la gomme de liaison.

EP 1940617-B1 décrit un stratifié vulcanisable comprenant deux couches et une couche de liaison intermédiaire à haute teneur en diène.

Les Demanderesses ont résolu le problème en utilisant une composition de caoutchouc diénique qui fait office de gomme de liaison entre ces deux compositions. Utilisée comme couche intermédiaire entre les deux compositions constitutives chacune d'une couche dans un stratifié, elle permet d'améliorer significativement la résistance du stratifié à la séparation des couches qui le constituent.

Ainsi, un premier objet de l'invention est un stratifié élastomère comprenant 3 couches,
- la première couche consistant en une composition de caoutchouc diénique comprenant une première matrice élastomère,
- la deuxième couche consistant en une composition de caoutchouc diénique comprenant une deuxième matrice élastomère, laquelle deuxième matrice élastomère comprend un deuxième élastomère terpolymère d'éthylène, d'une α-oléfine et d'un diène non conjugué et contient plus de 10% en masse d'unité diénique,
- la troisième couche consistant en une composition de caoutchouc diénique comprenant un troisième élastomère diénique ayant un taux massique d'unité diénique supérieur à 50%,
- la deuxième couche étant disposée entre la première couche et la troisième couche.

Un autre objet de l'invention est l'utilisation du stratifié conforme à l'invention dans un pneumatique.

L'invention concerne aussi un pneumatique qui comporte le stratifié conforme à l'invention.

L'invention porte également sur l'utilisation d'une composition adhésive identique à la composition de caoutchouc diénique constitutive de la deuxième couche du stratifié conforme à l'invention pour coller une composition de caoutchouc diénique identique à celle constitutive de la première couche du stratifié conforme à l'invention à une composition de caoutchouc diénique identique à celle constitutive de la troisième couche du stratifié conforme à l'invention.

### I. DESCRIPTION DETAILLEE DE L'INVENTION :

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de caoutchouc considérée et constitutive d'une couche.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

On entend par stratifié un produit fait de plusieurs couches de forme plane ou non plane, conformément à la définition donnée par la classification internationale des brevets.

Le stratifié élastomère conforme à l'invention comprend 3 couches,
- la première couche consistant en une composition de caoutchouc diénique comprenant une première matrice élastomère,
- la deuxième couche consistant en une composition de caoutchouc diénique comprenant une deuxième matrice élastomère, laquelle deuxième matrice élastomère comprend un deuxième élastomère terpolymère d'éthylène, d'une α-oléfine et d'un diène non conjugué et contient plus de 10% en masse d'unité diénique,
- la troisième couche consistant en une composition de caoutchouc diénique comprenant un troisième élastomère diénique ayant un taux massique d'unité diénique supérieur à 50%,
- la deuxième couche étant disposée entre la première couche et la troisième couche.

Le stratifié conforme à l'invention est dit élastomère car il comprend 3 couches consistant en des compositions de caoutchouc diénique.

De préférence, le stratifié consiste en 3 couches définies selon l'un quelconque des modes de réalisation de l'invention.

Par la nature des élastomères qui la composent, la composition de caoutchouc diénique qui constitue la deuxième couche est différente de la composition de caoutchouc diénique de la première couche et est différente de la composition de caoutchouc diénique de la troisième couche.

Par élastomère (ou indistinctement "caoutchouc", les deux termes étant considérés comme synonymes) "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).
On entend par élastomère diénique fortement insaturé un élastomère ayant un taux massique d'unité diénique supérieur à 50%.
On entend par élastomère diénique faiblement insaturé un élastomère ayant un taux massique d'unité diénique inférieur à 10%.
Le taux d'unité diénique qui se rapporte à un élastomère est exprimé en pourcent massique pour 100 g de l'élastomère. Il s'agit donc d'un taux massique. Par exemple un taux massique d'unité diénique de x% dans un élastomère A signifie que les unités diéniques représentent x g dans 100 g d'élastomère A, x étant un nombre de 0 à 100, par exemple égal à 5. Cette formulation est équivalente à celle qui consiste à dire que l'élastomère A contient x% d'unité diénique, ou que l'élastomère A présente x% d'unité diénique, ou encore que l'élastomère A a x% d'unité diénique.

On entend par unité diénique une unité monomère issue de l'insertion d'un motif monomère résultant de la polymérisation d'un monomère diène conjugué ou d'un monomère diène non conjugué, l'unité diénique comportant une double liaison carbone carbone.

On entend par matrice élastomère d'une composition de caoutchouc l'ensemble des élastomères contenus dans la composition de caoutchouc.
On entend par matrice élastomère fortement insaturée une matrice élastomère qui présente un taux massique d'unité diénique supérieur à 50%. Une matrice élastomère fortement insaturée contient typiquement un (ou plusieurs) élastomère diénique fortement insaturé ayant un taux massique d'unité diénique supérieur à 50%. A titre d'exemple, on peut citer les élastomères homopolymères et les copolymères de 1,3-diène, notamment butadiène ou isoprène.
On entend par matrice élastomère faiblement insaturée une matrice élastomère qui présente un taux massique d'unité diénique inférieur à 10%. Une matrice élastomère faiblement insaturée contient typiquement un (ou plusieurs) élastomère diénique faiblement insaturé ayant un taux massique d'unité diénique inférieur à 10%. La matrice élastomère faiblement insaturée peut néanmoins contenir un élastomère diénique fortement insaturé dans une proportion telle que le taux massique d'unités diéniques présente dans la matrice élastomère est inférieur à 10%.

Le taux d'unité diénique qui se rapporte à une matrice élastomère est exprimé en pourcent massique pour 100 g de la matrice élastomère. Il s'agit donc d'un taux massique. Par exemple un taux massique d'unité diénique de y% dans une matrice élastomère B signifie que la totalité des unités diéniques présentes dans la matrice élastomère B représente y g dans 100 g de matrice élastomère B, y étant un nombre de 0 à 100, par exemple égal à 10. Cette formulation est équivalente à celle qui consiste à dire que la matrice élastomère B contient y% d'unité diénique ou que la matrice élastomère B présente y% d'unité diénique.

### Deuxième matrice élastomère :

La deuxième matrice élastomère a pour caractéristique essentielle de présenter plus de 10% en masse d'unité diénique et de comprendre un terpolymère d'éthylène, d'une α-oléfine et d'un diène non conjugué, dit deuxième élastomère.

Il est entendu que le deuxième élastomère peut être un mélange de terpolymères d'éthylène, d'α-oléfine et de diène non conjugué qui se différencient des uns des autres par leur macrostructure ou leur microstructure, en particulier par le taux massique respectif des unités éthylène, α-oléfine et diène non conjugué

Selon un mode de réalisation particulier de l'invention, le deuxième élastomère présente au moins l'une des caractéristiques suivantes, de préférence toutes :
- les unités éthylène représentent entre 20 et 90%, préférentiellement entre 30 et 70% en masse du deuxième élastomère,
- les unités α-oléfine représentent entre 10 et 80%, préférentiellement de 15 à 70% en masse du deuxième élastomère,
- les unités diène non conjugué représentent plus de 10% en masse du deuxième élastomère.

Selon un mode de réalisation particulier de l'invention, le deuxième élastomère contient plus de 10% en masse d'unité diénique, préférentiellement entre 10 et 40%, plus préférentiellement entre 10 et 20% en masse d'unité diénique. Lorsque le deuxième élastomère présente un tel taux d'unité diénique, il se distingue des terpolymères d'éthylène, d'a-oléfine et de diène non conjugué qui sont conventionnellement utilisés dans les compositions de caoutchouc pour pneumatique, notamment dans les flancs de pneumatique pour leur résistance au vieillissement et à l'ozone, et qui présentent généralement un taux d'unité diénique d'au plus 10%.

En plus du deuxième élastomère, la deuxième matrice élastomère peut comprendre un autre élastomère diénique, en particulier un élastomère diénique fortement insaturé. A titre d'élastomère fortement insaturé, on peut citer ceux contenant des unités monomères diène conjugué, en particulier 1,3 diène ayant 4 à 12 atomes de carbone. Plus particulièrement conviennent les homopolymères et les copolymères de butadiène et d'isoprène. Avantageusement, cet autre élastomère diénique est un polyisoprène, de préférence un polyisoprène à fort taux de cis présentant un taux de liaison 1,4-cis supérieur à 90%, pourcentage calculé sur la base de la masse du polyisoprène, de manière plus préférentielle le caoutchouc naturel.

Lorsque la deuxième matrice élastomère comprend cet autre élastomère diénique fortement insaturé, la fraction pondérale de cet autre élastomère diénique dans la deuxième matrice élastomère diénique varie préférentiellement de 10 à 70% (de la masse de la deuxième matrice élastomère).

Selon un mode de réalisation particulier de l'invention, la deuxième matrice élastomère consiste en le deuxième élastomère et cet autre élastomère diénique fortement insaturé.

Selon un autre mode de réalisation de l'invention, le deuxième élastomère représente plus de 50% en masse de la deuxième matrice élastomère, de préférence plus de 90% en masse de la deuxième matrice élastomère, mieux la totalité de la deuxième matrice élastomère.

### Première matrice élastomère :

Selon un mode de réalisation de l'invention, la première matrice élastomère comprend un terpolymère d'éthylène, d'une α-oléfine et d'un diène non conjugué, désigné ci-après comme le premier élastomère ou encore appelé le premier élastomère terpolymère d'éthylène, d'une α-oléfine et d'un diène non conjugué.

Selon un mode de réalisation particulier de l'invention, le premier élastomère présente au moins l'une des caractéristiques suivantes, de préférence toutes :
- les unités éthylène représentent entre 20 et 90%, préférentiellement entre 30 et 70% en masse du deuxième élastomère,
- les unités α-oléfine représentent entre 10 et 80%, préférentiellement de 15 à 70% en masse du deuxième élastomère,
- les unités diène non conjugué représentent entre 0.5 et 10% en masse du premier élastomère.

Selon un mode de réalisation préférentiel de l'invention, le premier élastomère présente un taux massique d'unité diénique inférieur au taux massique d'unité diénique du deuxième élastomère.

Selon un mode de réalisation plus préférentiel de l'invention, le premier élastomère présente un taux massique d'unité diénique inférieur à 10%.

Selon un mode de réalisation de l'invention, le premier élastomère représente plus de 50% en masse de la première matrice élastomère, de préférence la totalité de la première matrice élastomère.

Selon un autre mode de réalisation de l'invention, la première matrice élastomère présente un taux massique d'unité diénique inférieur au taux massique d'unité diénique du deuxième élastomère. Par exemple selon ce mode de réalisation de l'invention, si le taux massique d'unité diénique du deuxième élastomère est de 14%, le taux massique d'unité diénique de la première matrice élastomère est inférieur à 14%, par exemple est de l'ordre de 5%.

Selon un mode de réalisation particulier de l'invention, la première matrice élastomère présente un taux massique d'unité diénique inférieur au taux massique d'unité diénique du deuxième élastomère et comprend le premier élastomère terpolymère d'éthylène, d'une α-oléfine et d'un diène non conjugué.

Selon un autre mode de réalisation de l'invention, la première matrice élastomère présente moins de 10% en masse d'unité diénique et comprend de préférence le premier élastomère terpolymère d'éthylène, d'une α-oléfine et d'un diène non conjugué. La matrice élastomère est considérée comme une matrice faiblement insaturée.

Il est entendu que le premier élastomère peut être un mélange de terpolymères d'éthylène, d'a-oléfine et de diène non conjugué qui se différencient des uns des autres par leur macrostructure ou leur microstructure, en particulier par le taux massique respectif des unités éthylène, α-oléfine et diène non conjugué.

L'a-oléfine dont les unités monomères constituent le premier élastomère ou le deuxième élastomère peut être un mélange d'alpha oléfines. L'a-oléfine comprend généralement 3 à 16 atomes de carbone. Conviennent comme α-oléfine par exemple le propylène, le 1-butène, le 1-pentène, le 1-hexène, le 1-octène et le 1-dodécène. Avantageusement, l'a-oléfine est le propylène, auquel cas le terpolymère est appelé communément un EPDM (en anglais « EPDM rubber »).

Le diène non conjugué dont les unités monomères constituent le premier élastomère ou le deuxième élastomère comprend généralement 6 à 12 atomes de carbone. A titre de diène non conjugué, on peut citer le dicyclopentadiène, le 1,4-hexadiène, le 5-éthylidène-2-norbornène, le 5-méthylène-2-norbornène, le 1,5-cyclooctadiène. Avantageusement, le diène non conjugué est le 5-éthylidène-2-norbornène.

De préférence, le premier élastomère ou le deuxième élastomère est un terpolymère d'éthylène, de propylène et de 5-éthylidène-2-norbornène.

De manière plus préférentielle, le premier élastomère et le deuxième élastomère sont chacun un terpolymère d'éthylène, de propylène et de 5-éthylidène-2-norbornène.

### Troisième élastomère diénique :

Le troisième élastomère diénique a pour caractéristique essentielle de présenter un taux massique d'unité diénique supérieur à 50%. Le troisième élastomère diénique peut être un élastomère contenant des unités monomère diène conjugué, en particulier 1,3 diène contenant 4 à 12 atomes de carbone, avantageusement isoprène.

Il est entendu que le troisième élastomère diénique peut être un mélange d'élastomères qui se différencient des uns des autres par leur macrostructure ou leur microstructure.

Selon un mode de réalisation préférentiel de l'invention, le troisième élastomère diénique est un polyisoprène. Le polyisoprène à titre de troisième élastomère diénique est de préférence un polyisoprène ayant un taux de liaison 1,4-cis supérieur à 90%, pourcentage calculé sur la base de la masse du polyisoprène. Avantageusement, le troisième élastomère diénique est le caoutchouc naturel.

Selon un mode de réalisation de l'invention, le troisième élastomère diénique, avantageusement le polyisoprène ou très avantageusement le caoutchouc naturel, représente au moins 95% en masse, de préférence la totalité de la matrice élastomère qui constitue la composition de caoutchouc diénique de la troisième couche.

La microstructure des élastomères est déterminée par analyse RMN ¹H, supplée par l'analyse RMN ¹³C lorsque la résolution des spectres RMN du ¹H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.
Pour les mesures sur des mélanges ou des élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.
Pour les mesures sur des élastomères solubles, est utilisée une sonde RMN liquide permettant d'observer le proton et le carbone en mode découplé du proton.
La préparation des échantillons non solubles est fait dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.
Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.
Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.
Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures sont réalisées à 25°C.

### Charge renforçante :

La composition de caoutchouc diénique constitutive de l'une quelconque des 3 couches comprend de préférence une charge renforçante, en particulier lorsque le stratifié est utilisé dans un pneumatique.

La charge renforçante peut être tout type de charge dite renforçante, connue pour ses capacités à renforcer une composition de caoutchouc diénique utilisable pour la fabrication de pneumatiques, par exemple une charge organique telle que du noir de carbone de préférence, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc diénique destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Pour coupler la charge inorganique renforçante à l'élastomère diénique, on utilise de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z - A - Sₓ - A - Z (V)

dans laquelle :
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 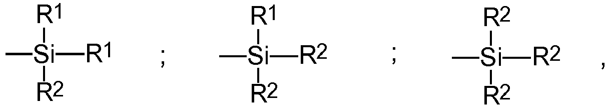 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silylalkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azodicarbonyle, tels que décrits par exemple dans les demandes de brevets WO 2006/125532, WO 2006/125533, WO 2006/125534.

A titre d'agent de couplage, on peut également citer les alkoxysilanes portant un groupe carboné insaturé susceptible de réagir par voie radicalaire avec une unité diénique de la matrice élastomère. A titre d'exemple on peut citer le 3-butène-triéthoxysilane, le 3-méthacryloxypropyltriméthoxysilane.

La teneur en agent de couplage est avantageusement inférieure à 20 pce (parties en masse pour cent parties d'élastomère présent dans la composition de caoutchouc considérée et constitutive d'une couche), étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition de caoutchouc diénique.

Selon un mode de réalisation particulier de l'invention, chacune des compositions de caoutchouc diénique constitutives respectivement des 3 couches du stratifié comprend une charge renforçante, de préférence un noir de carbone.

### Taux de charge renforçante :

Le taux de charge renforçante dans chacune des compositions de caoutchouc diénique du stratifié peut varier dans une large mesure, par exemple selon la nature de la matrice élastomère ou de la charge renforçante dans la composition de caoutchouc diénique ou selon la quantité de plastifiant dans la composition de caoutchouc diénique. Ces variables sont ajustées par l'homme du métier en fonction de l'usage qu'il est fait du stratifié, notamment dans un pneumatique.

Dans le cas d'un usage du stratifié dans lequel la première couche du stratifié est constitutive d'une bande de roulement destinée à équiper un pneumatique et la troisième couche est constitutive d'une sous couche à la bande de roulement, la nature de la charge renforçante dans la composition de caoutchouc diénique de la première couche et de la troisième couche ainsi que son taux sont choisis par l'homme du métier en adéquation avec les conditions particulières de cet usage. Par exemple la charge renforçante peut être un noir de carbone, une silice ou leur mélange, son taux dans la composition de caoutchouc diénique pouvant varier de 20 à 200 pce.

Selon l'un quelconque des modes de réalisations de l'invention, le taux de charge renforçante dans la composition de caoutchouc diénique de la deuxième couche varie de préférence de 5 à 80 pce, de manière plus préférentielle de 5 à 50 pce.

Selon un mode de réalisation particulier de l'invention, la composition de caoutchouc diénique de la deuxième couche comprend un taux de charge renforçante inférieur ou égal au taux de charge renforçante de la composition de caoutchouc diénique de la première couche.

### Autres additifs :

La composition de caoutchouc diénique constitutive de l'une quelconque des 3 couches peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité de la composition de caoutchouc diénique, d'améliorer sa faculté de mise en oeuvre à l'état cru.

Elle peut comporter également tout ou partie des additifs usuels habituellement utilisés dans les compositions d'élastomères destinées à constituer des mélanges d'articles finis en caoutchouc tels que des pneumatiques, comme par exemple des pigments, des agents de protection tels que cires anti-ozone, anti-ozonants chimiques, anti-oxydants, des agents anti-fatigue, un système de réticulation, des accélérateurs ou retardateurs de vulcanisation, des activateurs de vulcanisation. Lorsque la matrice élastomère contient un terpolymère d'éthylène, d'a-oléfine et de diène non conjugué, en particulier un EPDM, on peut utiliser des coagents de réticulation conventionnellement utilisés dans la réticulation des EPDM. Comme coagent de réticulation, on peut citer le triallyl isocyanurate, l'éthylène diméthacrylate, le triméthylolpropane triméthacrylate. Le système de réticulation est de préférence à base de soufre, mais il peut être également à base de donneur de soufre, de peroxyde, de bismaléimide ou de leurs mélanges.

De préférence, les compositions de caoutchouc diénique constitutives respectivement de la première couche, de la deuxième couche et de la troisième couche comprennent un système de réticulation, de préférence un système de vulcanisation.

Les compositions de caoutchouc diénique utiles aux besoins de l'invention peuvent aussi comporter des plastifiants, par exemple des huiles d'extension, de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des résines plastifiantes hydrocarbonées présentant une haute Tg, de préférence supérieure à 30°C, telles que décrites par exemple dans les demandes WO 2005/087859, WO 2006/061064 et WO 2007/017060. La teneur en plastifiant est ajustée par l'homme du métier en fonction de la viscosité et des propriétés recherchées de la composition de caoutchouc diénique qui sont déterminées par l'usage qu'il sera fait de la composition de caoutchouc diénique. La viscosité de la composition de caoutchouc diénique elle-même dépend de nombreuses variables, comme la viscosité de la matrice élastomère, du taux de charge renforçante, des interactions qui peuvent exister entre la matrice élastomère et la charge renforçante. Donc l'homme du métier avec ses connaissances générales choisit le taux de plastifiant adéquat en tenant compte de ces différentes variables.

Si la composition de caoutchouc diénique de la deuxième couche utile au besoin de l'invention contient un plastifiant, elle en contient de préférence au plus 20 pce, de manière plus préférentielle moins de 10 pce, de manière encore plus préférentielle moins de 5 pce. Ces modes de réalisation préférentiels permettent d'atteindre des niveaux d'adhésion entre la première et la troisième couche très remarquables grâce à l'interphase constituée par la deuxième couche.

Selon un autre mode de réalisation de l'invention, la composition de caoutchouc diénique de la deuxième couche est dépourvue de plastifiant. Ce mode de réalisation avantageux du point de vue de la performance d'adhésion est particulièrement adapté pour les compositions de caoutchouc diéniques constitutives de la deuxième couche qui sont faiblement chargées, notamment celles qui comprennent au plus 50 pce de charge renforçante.

### Préparation des compositions de caoutchouc diéniques :

Les compositions de caoutchouc diéniques utiles aux besoins de l'invention sont fabriquées dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

### Préparation du stratifié :

Dans la fabrication du stratifié conforme à l'invention, les compositions de caoutchouc diénique constitutives des couches sont apposées à l'état cru, les unes sur les autres. Pour faciliter l'adhésion interfaciale, les couches sont appliquées de préférence à chaud, les couches étant à l'état cru.

On comprendra aisément que, selon les domaines d'application spécifiques, le stratifié conforme à l'invention peut comporter plusieurs gammes préférentielles d'épaisseur. Ainsi, par exemple, pour des bandages pneumatiques de type tourisme, les première couche et troisième couche peuvent avoir une épaisseur d'au moins 2 mm, préférentiellement comprise entre 3 et 10 mm. Selon un autre exemple, pour des bandages pneumatiques de véhicules poids lourds ou agricole, l'épaisseur préférentielle peut se situer entre 2 et 20 mm pour les première et troisième couches. Selon un autre exemple, pour des bandages pneumatiques de véhicules dans le domaine du génie civil ou pour avions, l'épaisseur préférentielle des première et troisième couches peut se situer entre 2 et 100 mm.

Selon l'un quelconque des modes de réalisation de l'invention, la deuxième couche présente de préférence une épaisseur allant de 60 µm à quelques millimètres, par exemple de 100 µm à 5 mm. L'épaisseur est ajustée en fonction des conditions particulières d'usage du stratifié.

Pour les épaisseurs les plus faibles, en particulier de l'ordre de quelques centaines de µm, les couches sont de préférence formées par application de la composition de caoutchouc diénique sous forme d'une dissolution composée d'un volume de solvant. Pour des épaisseurs supérieures, on préfère calandrer, voire extruder la composition de caoutchouc diénique sous forme de couche.

Pour fabriquer le stratifié, les couches peuvent être disposées l'une sur l'autre par application successive des couches, par exemple sur un tambour de confection classiquement utilisé dans la fabrication de bandage (ou enveloppe) de pneumatique. Par exemple la première couche est déposée sur le tambour, la deuxième couche sur la première couche, la troisième couche sur la deuxième couche.

Le stratifié peut être soit à l'état cru (avant réticulation ou vulcanisation), soit à l'état cuit (après réticulation ou vulcanisation).

Dans la fabrication d'un pneumatique contenant le stratifié, le stratifié peut être fabriqué préalablement à la fabrication du pneumatique ou au cours de la fabrication du pneumatique. Dans le premier cas, le stratifié au préalable formé et à l'état cru peut être appliqué au pneumatique en le déposant par exemple sur l'armature de carcasse ou de sommet du pneumatique, également à l'état cru. Dans le second cas, la troisième couche peut être déposée par exemple sur l'armature de carcasse ou de sommet du pneumatique, également à l'état cru, puis la deuxième couche sur la troisième couche et la première couche sur la deuxième couche, les première, deuxième et troisième couches étant à l'état cru.

Le stratifié peut être utilisé dans un pneumatique, le pneumatique comprenant une bande de roulement, deux flancs, deux bourrelets, une armature de carcasse passant dans les deux flancs et ancrée aux deux bourrelets, et une armature de sommet disposée circonférentiellement entre la bande de roulement et l'armature de carcasse.

Selon un mode de réalisation de l'invention, le stratifié est utilisé dans un pneumatique de façon à ce que la première couche constitue une partie ou la totalité de la bande de roulement du pneumatique et la troisième couche une partie ou la totalité d'une sous couche à la bande de roulement.

Selon un mode de réalisation préférentiel de l'invention dans lequel le stratifié est utilisé dans un pneumatique, la première couche constitue la totalité de la bande de roulement et la troisième couche la totalité d'une sous couche à la bande de roulement.

Lorsque la troisième couche dans le stratifié est utilisée comme sous couche à la bande de roulement d'un pneumatique, de préférence elle n'est pas destinée à entrer en contact avec la surface de roulement du pneumatique.

Le pneumatique qui est pourvu du stratifié et qui représente un autre objet de l'invention, peut être à l'état cuit ou à l'état cru.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Préparation des compositions de caoutchouc diénique et des stratifiés :

Pour les compositions dont la formulation figure dans le tableau 1, on procède de la manière suivante :
On introduit dans un mélangeur interne (taux de remplissage final : environ 70% en volume), dont la température initiale de cuve est d'environ 80°C, successivement l'élastomère, la charge renforçante, ainsi que les divers autres ingrédients a l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaque (épaisseur 2 à 3mm) ou de couche pour la mesure de leurs niveaux d'adhésion respectifs.

Les compositions C1, C2 et C3 diffèrent par la nature de la matrice élastomère qui les compose respectivement.
La composition C1 représente la première couche du stratifié et contient un élastomère EPDM faiblement insaturé comportant 5% en masse d'unité diénique.
La composition C2 représente la deuxième couche du stratifié et contient un élastomère EPDM comportant 14% en masse d'unité diénique, donc par définition n'étant pas faiblement insaturé.
La composition C3 représente la troisième couche du stratifié et contient un élastomère fortement insaturé, le caoutchouc naturel.

### 11.2-Mesures et tests utilisés :

La mesure d'adhésion est réalisée par un test dit de pelage en T ou aussi appelé pelage à 180°. Les éprouvettes de pelage sont réalisées par mise en contact des deux couches (les compositions constitutives des couches étant à l'état cru) dont l'adhésion doit être testée. Une amorce de rupture est insérée entre les deux couches. Chacune des couches est renforcée par une nappe composite qui limite la déformation des dites couches sous traction.

L'éprouvette une fois assemblé est porté à 150°C sous une pression de 16 bars pendant 30 minutes. Des bandes de 30 mm de largeur sont ensuite découpées au massicot. Les deux côtés de l'amorce de rupture ont été ensuite placées dans les mors d'une machine de traction de marque « Instron ». Les essais sont réalisés à 20°C et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à la propagation de la rupture au sein de l'éprouvette et donc à la valeur stabilisée moyenne de la courbe. Les valeurs d'adhésion des exemples sont normées par rapport à un témoin (base 100).

L'adhésion est mesurée entre les deux couches C1 et C3, entre les deux couches C1 et C2 et entre les deux couches C2 et C3. La valeur de la mesure d'adhésion entre les deux couches C1 et C3 est retenue comme la valeur témoin, puisque le stratifié comportant les deux seules couches C1 et C3 n'est pas conforme à l'invention en raison de l'absence de la couche C2.
Le tableau 2 présente les résultats obtenus après tests de pelage à température ambiante. Les résultats sont exprimés en indice de performance. Un indice supérieur à 100 indique une plus forte amélioration de l'adhésion.

On constate que les indices de performance d'adhésion d'une part entre la première couche et la deuxième couche, d'autre part entre la deuxième couche et la troisième couche sont les plus élevés (respectivement 600 et 265) par rapport au témoin. La présence dans un stratifié de la deuxième couche entre la première couche et la troisième couche du stratifié permet d'augmenter très fortement la résistance du stratifié à la séparation des couches qui le constituent, comparativement au stratifié témoin comportant uniquement les couches C1 et C3.

**Tableau 1**

| | C1 | C2 | C3 |
|---|---|---|---|
| NR (1) | - | - | 100 |
| EPDM (2) | 100 | - | - |
| EPDM (3) | - | 100 | - |
| Noir de carbone (4) | 30 | 30 | 30 |
| Antioxydant (5) | 1,5 | 1,5 | 1,5 |
| Acide stéarique (6) | 2,5 | 2,5 | 2,5 |
| Oxyde de Zinc (7) | 3 | 3 | 3 |
| Accélérateur (8) | 2,0 | 2,0 | 2,0 |
| Soufre | 1,0 | 1,0 | 1,0 |

| | | | |
|---|---|---|---|
| (1) Caoutchouc naturel (2) EPDM Nordel IP 4570 de la Société Dow (3) EPDM 9090M de la Société Mitsui (4) Noir de carbone de grade N234 selon la norme ASTM D-1765 (5) N-1,3-diméthylbutyl-N-phénylparaphénylènediamine « Santoflex 6-PPD » de la société Flexsys (6) Stéarine « Pristerene 4931 » de la société Uniqema (7) Oxyde de zinc de grade industriel de la société Umicore (8) N-cyclohexyl-2-benzothiazyle sulfénamide « Santocure CBS » de la société Flexsys | | | |

**Tableau 2**

| | | | |
|---|---|---|---|
| Interface entre couches testée | C1/C3 | C2/C3 | C2/C1 |
| Niveau d'adhésion | 100 | 265 | 600 |

## Revendications

1. Stratifié élastomère comprenant 3 couches,
- la première couche consistant en une composition de caoutchouc diénique comprenant une première matrice élastomère,
- la deuxième couche consistant en une composition de caoutchouc diénique comprenant une deuxième matrice élastomère, laquelle deuxième matrice élastomère comprend un deuxième élastomère terpolymère d'éthylène, d'une α-oléfine et d'un diène non conjugué et contient plus de 10% en masse d'unité diénique,
- la troisième couche consistant en une composition de caoutchouc diénique comprenant un troisième élastomère diénique ayant un taux massique d'unité diénique supérieur à 50%,
- la deuxième couche étant disposée entre la première couche et la troisième couche.

2. Stratifié selon la revendication 1 dans lequel la première matrice élastomère comprend un premier élastomère terpolymère d'éthylène, d'une α-oléfine et d'un diène non conjugué.

3. Stratifié selon la revendication 2 dans lequel le premier élastomère est un EPDM, de préférence un terpolymère d'éthylène, de propylène et de 5-éthylidène-2-norbornène.

4. Stratifié selon l'une quelconque des revendications 2 à 3 dans lequel le premier élastomère présente un taux massique d'unité diénique inférieur au taux massique d'unité diénique du deuxième élastomère.

5. Stratifié selon l'une quelconque des revendications 2 à 4 dans lequel le premier élastomère présente un taux massique d'unité diénique inférieur à 10%.

6. Stratifié selon l'une quelconque des revendications 2 à 5 dans lequel le premier élastomère représente plus de 50% en masse de la première matrice élastomère, de préférence la totalité de la première matrice élastomère.

7. Stratifié selon l'une quelconque des revendications 1 à 6 dans lequel la première matrice élastomère présente un taux massique d'unité diénique inférieur au taux massique d'unité diénique du deuxième élastomère.

8. Stratifié selon l'une quelconque des revendications 1 à 7 dans lequel la première matrice élastomère présente moins de 10% en masse d'unité diénique.

9. Stratifié selon l'une quelconque des revendications 1 à 8 dans lequel le deuxième élastomère contient plus de 10% en masse d'unité diénique, de préférence entre 10 et 40% en masse d'unité diénique, plus préférentiellement entre 10 et 20% en masse d'unité diénique.

10. Stratifié selon l'une quelconque des revendications 1 à 9 dans lequel le deuxième élastomère est un EPDM, de préférence un terpolymère d'éthylène, de propylène et de 5-éthylidène-2-norbornène.

11. Stratifié selon l'une quelconque des revendications 1 à 10 dans lequel la deuxième matrice élastomère comprend un autre élastomère diénique fortement insaturé qui représente de préférence de 10 à 70% en masse de la deuxième matrice élastomère.

12. Stratifié selon la revendication 11 dans lequel la deuxième matrice élastomère consiste en le deuxième élastomère et l'autre élastomère diénique fortement insaturé.

13. Stratifié selon la revendication 11 ou 12 dans lequel l'autre élastomère diénique fortement insaturé est un polyisoprène, de manière préférentielle un polyisoprène à fort taux de cis présentant un taux de liaison 1,4-cis supérieur à 90%, de manière plus préférentielle le caoutchouc naturel.

14. Stratifié selon l'une quelconque des revendications 1 à 13 dans lequel le deuxième élastomère représente plus de 50%, de préférence plus de 90% en masse de la deuxième matrice élastomère.

15. Stratifié selon l'une quelconque des revendications 1 à 10 dans lequel le deuxième élastomère représente la totalité de la deuxième matrice élastomère.

16. Stratifié selon l'une quelconque des revendications 1 à 15 dans lequel le troisième élastomère diénique contient des unités monomères 1,3-diène, de préférence isoprène.

17. Stratifié selon la revendication 16 dans lequel le troisième élastomère diénique est un polyisoprène ayant de préférence un taux de liaison 1,4-cis supérieur à 90%, de préférence le caoutchouc naturel.

18. Stratifié selon l'une quelconque des revendications 1 à 17 dans lequel le troisième élastomère diénique représente au moins 95% en masse, de préférence la totalité de la matrice élastomère qui constitue la composition de caoutchouc diénique de la troisième couche.

19. Stratifié selon l'une quelconque des revendications 1 à 18 dans lequel la composition de caoutchouc diénique constitutive de l'une quelconque des 3 couches comprend une charge renforçante, de préférence un noir de carbone.

20. Stratifié selon la revendication 19 dans lequel les compositions de caoutchouc diénique constitutives respectivement de la première couche, de la deuxième couche et de la troisième couche comprennent une charge renforçante, de préférence un noir de carbone.

21. Stratifié selon l'une quelconque des revendications 1 à 20 dans lequel la composition de caoutchouc diénique constitutive de l'une quelconque des 3 couches comprend un système de réticulation, de préférence un système de vulcanisation.

22. Stratifié selon la revendication 21 dans lequel les compositions de caoutchouc diénique constitutives respectivement de la première couche, de la deuxième couche et de la troisième couche comprennent un système de réticulation, de préférence un système de vulcanisation.

23. Stratifié selon l'une quelconque des revendications 1 à 22 dans lequel la composition de caoutchouc diénique de la deuxième couche contient au plus 20 pce d'un plastifiant, de préférence moins de 10 pce.

24. Stratifié selon l'une quelconque des revendications 1 à 22 dans lequel la composition de caoutchouc diénique de la deuxième couche est dépourvue de plastifiant.

25. Utilisation dans un pneumatique d'un stratifié défini selon l'une quelconque des revendications 1 à 24.

26. Pneumatique comportant une bande de roulement, deux flancs, deux bourrelets, une armature de carcasse passant dans les deux flancs et ancrée aux deux bourrelets, et une armature de sommet disposée circonférentiellement entre la bande de roulement et l'armature de carcasse, lequel pneumatique comprend un stratifié selon l'une quelconque des revendications 1 à 24.

27. Pneumatique selon la revendication 26 dans lequel la première couche du stratifié constitue une partie ou la totalité de la bande de roulement du pneumatique et la troisième couche du stratifié constitue une partie ou la totalité d'une sous-couche à la bande de roulement.

28. Utilisation d'une composition adhésive pour coller deux compositions, **caractérisée en ce que** la composition adhésive est identique à la composition de caoutchouc diénique constitutive de la deuxième couche définie selon l'une quelconque des revendications 1 à 24, et que les deux compositions à coller sont respectivement identiques aux compositions de caoutchouc diénique constitutives de la première couche et de la troisième couche définies selon l'une quelconque des revendications 1 à 24.

## Patentansprüche

1. Elastomerlaminat mit 3 Schichten,
- wobei die erste Schicht aus einer Dienkautschukzusammensetzung, die eine erste Elastomermatrix umfasst, besteht,
- wobei die zweite Schicht aus einer Dienkautschukzusammensetzung, die eine zweite Elastomermatrix umfasst, besteht, wobei die zweite Elastomermatrix ein zweites Terpolymer-Elastomer aus Ethylen, einem α-Olefin und einem nicht konjugierten Dien umfasst mehr als 10 Massen-% Dien-Einheiten enthält,
- wobei die dritte Schicht aus einer Dienkautschukzusammensetzung, die ein drittes Dienelastomer mit einem Massenanteil an Dien-Einheiten von mehr als 50 % umfasst, besteht,
- wobei die zweite Schicht zwischen der ersten Schicht und der dritten Schicht angeordnet ist.

2. Laminat nach Anspruch 1, wobei die erste Elastomermatrix ein erstes Terpolymer-Elastomer aus Ethylen, einem α-Olefinen einem nicht konjugierten Dien umfasst.

3. Laminat nach Anspruch 2, wobei es sich bei dem ersten Elastomer um ein EPDM, vorzugsweise ein Terpolymer aus Ethylen, Propylen und 5-Ethyliden-2-norbornen, handelt.

4. Laminat nach einem der Ansprüche 2 bis 3, wobei das erste Elastomer einen Massenanteil an Dien-Einheiten aufweist, der kleiner ist als der Massenanteil an Dien-Einheiten des ersten Elastomers.

5. Laminat nach einem der Ansprüche 2 bis 4, wobei das erste Elastomer einen Massengehalt an Dien-Einheiten von weniger als 10 % aufweist.

6. Laminat nach einem der Ansprüche 2 bis 5, wobei das erste Elastomer mehr als 50 Massen-% der ersten Elastomermatrix, vorzugsweise die gesamte erste Elastomermatrix, ausmacht.

7. Laminat nach einem der Ansprüche 1 bis 6, wobei die erste Elastomermatrix einen Massenanteil an Dien-Einheiten aufweist, der kleiner ist als der Massenanteil an Dien-Einheiten des zweiten Elastomers.

8. Laminat nach einem der Ansprüche 1 bis 7, wobei die erste Elastomermatrix mindestens 10 Massen-% an Dien-Einheiten aufweist.

9. Laminat nach einem der Ansprüche 1 bis 8, wobei das zweite Elastomer mehr als 10 Massen-% Dien-Einheiten, vorzugsweise zwischen 10 und 40 Massen-% Dien-Einheiten, weiter bevorzugt zwischen 10 und 20 Massen-% Dien-Einheiten, enthält.

10. Laminat nach einem der Ansprüche 1 bis 9, wobei es sich bei dem zweiten Elastomer um ein EPDM, vorzugsweise ein Terpolymer von Ethylen, Propylen und 5-Ethylen-2-norbornen handelt.

11. Laminat nach einem der Ansprüche 1 bis 10, wobei die zweite Elastomermatrix ein weiteres hoch ungesättigtes Dienelastomer umfasst, das vorzugsweise 10 bis 70 Massen-% der zweiten Elastomermatrix ausmacht.

12. Laminat nach Anspruch 11, wobei die zweite Elastomermatrix aus dem zweiten Elastomer und dem anderen hoch ungesättigten Dienelastomer besteht.

13. Laminat nach Anspruch 11 oder 12, wobei es sich bei dem anderen hoch ungesättigten Dienelastomer um ein Polyisopren, vorzugsweise ein Polyisopren mit hohem cis-Gehalt, das einen Gehalt an cis-1,4-Bindungen von mehr als 90 % aufweist, weiter bevorzugt Naturkautschuk, handelt.

14. Laminat nach einem der Ansprüche 1 bis 13, wobei das zweite Elastomer mehr als 50 Massen-%, vorzugsweise mehr als 90 Massen-%, der zweiten Elastomermatrix ausmacht.

15. Laminat nach einem der Ansprüche 1 bis 10, wobei das zweite Elastomer die gesamte zweite Elastomermatrix ausmacht.

16. Laminat nach einem der Ansprüche 1 bis 15, wobei das dritte Dienelastomer 1,3-Dien-Monomereinheiten, vorzugsweise Isopren, umfasst.

17. Laminat nach Anspruch 16, wobei das es sich bei dem dritten Dienelastomer um ein Polyisopren, das vorzugsweise einen Gehalt an cis-1,4-Bindungen von mehr als 90 % aufweist, vorzugsweise Naturkautschuk, handelt.

18. Laminat nach einem der Ansprüche 1 bis 17, wobei das dritte Dienelastomer mindestens 95 Massen-% und vorzugsweise die Gesamtheit der Elastomermatrix, die die Dienkautschukzusammensetzung der dritten Schicht bildet, ausmacht.

19. Laminat nach einem der Ansprüche 1 bis 18, wobei die Dienkautschukzusammensetzung, die eine der 3 Schichten bildet, einen verstärkenden Füllstoff, vorzugsweise einen Ruß, umfasst.

20. Laminat nach Anspruch 19, wobei die Dienkautschukzusammensetzungen, die die erste Schicht, die zweite Schicht bzw. die dritte Schicht bilden, einen verstärkenden Füllstoff, vorzugsweise einen Ruß, umfassen.

21. Laminat nach einem der Ansprüche 1 bis 20, wobei die Dienkautschukzusammensetzung, die eine der 3 Schichten bildet, ein Vernetzungssystem, vorzugsweise ein Vulkanisationssystem, umfasst.

22. Laminat nach Anspruch 21, wobei die Dienkautschukzusammensetzungen, die die erste Schicht, die zweite Schicht bzw. die dritte Schicht bilden, ein Vernetzungssystem, vorzugsweise ein Vulkanisationssystem, umfassen.

23. Laminat nach einem der Ansprüche 1 bis 22, wobei die Dienkautschukzusammensetzung der zweiten Schicht höchstens 20 phe Weichmacher, vorzugsweise weniger als 10 phe, enthält.

24. Laminat nach einem der Ansprüche 1 bis 22, wobei die Dienkautschukzusammensetzung der zweiten Schicht keinen Weichmacher enthält.

25. Verwendung eines Laminats gemäß einem der Ansprüche 1 bis 24 in einem Reifen.

26. Reifen, umfassend eine Lauffläche, zwei Flanken, zwei Wülste, eine Karkassenbewehrung, die in die beiden Flanken läuft und an den beiden Wülsten verankert ist, und eine Scheitelbewehrung, die in Umfangsrichtung zwischen der Lauffläche und der Karkassenbewehrung angeordnet ist, wobei der Reifen ein Laminat nach einem der Ansprüche 1 bis 24 umfasst.

27. Reifen nach Anspruch 26, wobei die erste Schicht des Laminats einen Teil oder die Gesamtheit der Lauffläche des Reifens bildet und die dritte Schicht des Laminats einen Teil oder die Gesamtheit einer Unterschicht der Lauffläche bildet.

28. Verwendung einer Klebstoffzusammensetzung zum Verkleben von zwei Zusammensetzungen, **dadurch gekennzeichnet, dass** die Klebstoffzusammensetzung mit der die die zweite Schicht bildenden Dienkautschukzusammensetzung gemäß einem der Ansprüche 1 bis 24 identisch ist und die beiden zu verklebenden Zusammensetzungen mit den die erste Schicht bzw. die dritte Schicht bildenden Dienkautschukzusammensetzungen gemäß einem der Ansprüche 1 bis 24 identisch sind.

## Claims

1. Elastomer laminate comprising 3 layers,
- the first layer consisting of a diene rubber composition comprising a first elastomer matrix,
- the second layer consisting of a diene rubber composition comprising a second elastomer matrix, which second elastomer matrix comprises a second terpolymeric elastomer of ethylene, of an α-olefin and of a non-conjugated diene and contains more than 10% by weight of diene units,
- the third layer consisting of a diene rubber composition comprising a third diene elastomer having a content by weight of diene units of greater than 50%,
- the second layer being arranged between the first layer and the third layer.

2. Laminate according Claim 1, in which the first elastomer matrix comprises a first terpolymeric elastomer of ethylene, of an α-olefin and of a non-conjugated diene.

3. Laminate according to Claim 2, in which the first elastomer is an EPDM, preferably a terpolymer of ethylene, of propylene and of 5-ethylidene-2-norbornene.

4. Laminate according to either one of Claims 2 and 3, in which the first elastomer has a content by weight of diene units which is less than the content by weight of diene units of the second elastomer.

5. Laminate according to any one of Claims 2 to 4, in which the first elastomer has a content by weight of diene units of less than 10%.

6. Laminate according to any one of Claims 2 to 5, in which the first elastomer represents more than 50% by weight of the first elastomer matrix, preferably all of the first elastomer matrix.

7. Laminate according to any one of Claims 1 to 6, in which the first elastomer matrix has a content by weight of diene units which is less than the content by weight of diene units of the second elastomer.

8. Laminate according to any one of Claims 1 to 7, in which the first elastomer matrix has less than 10% by weight of diene units.

9. Laminate according to any one of Claims 1 to 8, in which the second elastomer contains more than 10% by weight of diene units, preferably between 10 and 40% by weight of diene units, more preferentially between 10 and 20% by weight of diene units.

10. Laminate according to any one of Claims 1 to 9, in which the second elastomer is an EPDM, preferably a terpolymer of ethylene, of propylene, and of 5-ethylidene-2-norbornene.

11. Laminate according to any one of Claims 1 to 10, in which the second elastomer matrix comprises another highly unsaturated diene elastomer which preferably represents from 10 to 70% by weight of the second elastomer matrix.

12. Laminate according to Claim 11, in which the second elastomer matrix consists of the second elastomer and the other highly unsaturated diene elastomer.

13. Laminate according to Claim 11 or 12, in which the other highly unsaturated diene elastomer is a polyisoprene, preferentially a polyisoprene with a high cis content, having a degree of 1,4-cis bonding of greater than 90%, more preferentially natural rubber.

14. Laminate according to any one of Claims 1 to 13, in which the second elastomer represents more than 50%, preferably more than 90%, by weight of the second elastomer matrix.

15. Laminate according to any one of Claims 1 to 10, in which the second elastomer represents all of the second elastomer matrix.

16. Laminate according to any one of Claims 1 to 15. in which the third diene elastomer comprises monomeric 1,3-diene units, preferably isoprene.

17. Laminate according to Claim 16, in which the third diene elastomer is a polyisoprene preferably having a degree of cis-1,4-bonding of greater than 90%, preferably natural rubber.

18. Laminate according to any one of Claims 1 to 17, in which the third diene elastomer represents at least 95% by weight, preferably all, of the elastomer matrix which constitutes the diene rubber composition of the third layer.

19. Laminate according to any one of Claims 1 to 18, in which the diene rubber composition which constitutes any one of the 3 layers comprises a reinforcing filler, preferably a carbon black.

20. Laminate according to Claim 19, in which the diene rubber compositions which constitute respectively the first layer, the second layer and the third layer comprise a reinforcing filler, preferably a carbon black.

21. Laminate according to any one of Claims 1 to 20, in which the diene rubber composition which constitutes any one of the 3 layers comprises a crosslinking system, preferably a vulcanization system.

22. Laminate according to Claim 21, in which the diene rubber compositions which constitute respectively the first layer, the second layer and the third layer comprise a crosslinking system, preferably a vulcanization system.

23. Laminate according to any one of Claims 1 to 22, in which the diene rubber composition of the second layer contains at most 20 phr of plasticizing agent, preferably less than 10 phr.

24. Laminate according to any one of Claims 1 to 22, in which the diene rubber composition of the second layer does not contain plasticizing agent.

25. Use, in a tyre, of a laminate defined according to any one of Claims 1 to 24.

26. Tyre comprising a tread, two sidewalls, two beads, a carcass reinforcement passing into the two sidewalls and anchored to the two beads, and a crown reinforcement arranged circumferentially between the tread and the carcass reinforcement, which tyre comprises a laminate according to any one of Claims 1 to 24.

27. Tyre according to Claim 26, in which the first layer of the laminate constitutes a portion or all of the tyre tread and the third layer of the laminate constitutes a portion or all of a tread underlayer.

28. Use of an adhesive composition to adhere two compositions, **characterized in that** the adhesive composition is identical to the diene rubber composition constituting the second layer defined according to any one of Claims 1 to 24, and that the two compositions to be adhered are respectively identical to the diene rubber compositions constituting the first layer and the third layer defined according to any one of Claims 1 to 24.
